# EUROPEAN PATENT SPECIFICATION

(11) **EP 3 569 348 B1**
(45) Date of publication and mention of the grant of the patent: **17.12.2025**
(21) Application number: 17892036.9
(22) Date of filing: 19.01.2017
(51) Int. Cl.: B23K 37/00, B23K 9/24

(54) **AUTOMATIC REPLACEMENT DEVICE AND METHOD FOR GAS SHIELDED WELDING TUNGSTEN ELECTRODE OF ROBOT WELDING SYSTEM**
VORRICHTUNG UND VERFAHREN ZUM AUTOMATISCHEN AUSTAUSCH EINER WOLFRAMELEKTRODE EINES ROBOTERSCHWEISSSYSTEMS ZUM SCHUTZGASSCHWEISSEN
DISPOSITIF ET PROCÉDÉ DE REMPLACEMENT AUTOMATIQUE POUR ÉLECTRODE DE TUNGSTÈNE DE SOUDAGE PROTÉGÉE CONTRE LES GAZ D'UN SYSTÈME DE SOUDAGE ROBOTISÉ

(30) Priority: 12.01.2017 CN 201710022485
(43) Date of publication of application: 20.11.2019
(73) Proprietor: Shanghai Electric Nuclear Power Equipment Co., Ltd, Shanghai 201306 (CN)
(72) Inventor: YANG, Chengdong, Shanghai 201306 (CN); ZHANG, Maolong, Shanghai 201306 (CN); TANG, Weibao, Shanghai 201306 (CN); LUO, Qing, Shanghai 201306 (CN)
(74) Representative: Sanger, Phillip Simon
(86) International application number: PCT/CN2017/071681
(87) International publication number: WO 2018/129764

(56) References cited:
- CN-A- 105 414 838
- CN-U- 205 254 369
- CN-U- 205 702 801
- US-A1- 2016 016 251
- US-A1- 2016 016 251

## Description

### FIELD

Embodiments of the present invention generally relate to an apparatus for automatically replacing a tungsten electrode for tungsten inert gas welding of a robot welding system and a corresponding method.

### BACKGROUND

Nuclear power is an important orientation for future development of energy due to its characteristics of high energy density, cleanness, and low carbon emission. Steam generator is a main device of a nuclear island. During the process of manufacturing a steam generating, a critical procedure is tube-to-tubesheet welding. Currently, tungsten inert gas welding (TIG) is a dominant technique. During the welding process, a burnt-off tungsten electrode is usually replaced manually. When a robot system is adopted to perform the tube-to-tubesheet welding, manual replacement of tungsten electrodes will not only lower the automation level of the system, but also will affect the welding efficiency. US 2016/016251 A1 discloses an apparatus for automatically replacing a tungsten electrode for tungsten inert gas welding of a robot welding system, comprising: a tungsten electrode mounting/removing clamp, a first tungsten electrode seat for resting a burnt-off tungsten electrode, a second tungsten electrode seat for resting a new tungsten electrode, a first carriage for disposing the first tungsten electrode seat, and a second carriage for disposing the second tungsten electrode seat.

### SUMMARY

An object of the present invention is to provide an apparatus for automatically replacing a tungsten electrode for tungsten inert gas welding of a robot welding system and a corresponding method, which enables the robot welding system to automatically replace a burnt-off tungsten electrode, thereby guaranteeing welding quality of the robot and enhancing welding efficiency.

To achieve the object above, a technical solution of the present invention is to provide an apparatus according to claim 1 as well as a method according to claim 5.

Optionally, the apparatus for automatically replacing a tungsten electrode further comprises a gas hood mounting/ removing clamp which is configured for removing a gas hood from the welding gun with the burnt-off tungsten electrode and mounting the gas hood to the welding gun with the new tungsten gun.

Optionally, the apparatus for automatically replacing a tungsten electrode is provided in a robot welding system that performs tube -to - tubesheet tungsten inert gas welding.

Another technical solution of the present disclosure provides a method according to claim 5 for automatically replacing a tungsten electrode for tungsten inert gas welding, which uses the apparatus for automatically replacing a tungsten electrode as mentioned above.

In view of the above, when a robot welding system is adopted for automated welding, the apparatus for automatically replacing a tungsten electrode for tungsten inert gas welding and the corresponding method according to the present invention may implement automatic replacement of tungsten electrodes, which thereby may guarantee weld-seam quality of robot welding, improve automated level of the system, and enhance welding efficiency.

### BRIEF DESCRIPTION OF THE DRAWINGS

Fig. 1 is a structural schematic diagram of an apparatus for automatically replacing a tungsten electrode for tungsten inert gas welding according to the present invention;
Fig. 2 is a flow diagram of a method for automatically replacing a tungsten electrode for tungsten inert gas welding according to the present invention.

### DETAILED DESCRIPTION OF EMBODIMENTS

The present invention provides an apparatus for automatically replacing a tungsten electrode for tungsten inert gas welding, which is adapted to a robot welding system for a steam generator of a nuclear island. During a TIG welding process performed by the robot welding system, when a tungsten electrode is detected burnt off, the robot drives a welding gun to a tungsten electrode automatic replacement platform, such that a series of consecutive actions, including removing a gas hood, removing the burnt-off tungsten electrode, mounting a new tungsten electrode, and mounting the gas hood, are automatically performed by the apparatus for automatically replacing a tungsten electrode, thereby implementing automatic replacement of the burnt-off tungsten electrode on a tube-to-tubesheet welding head.

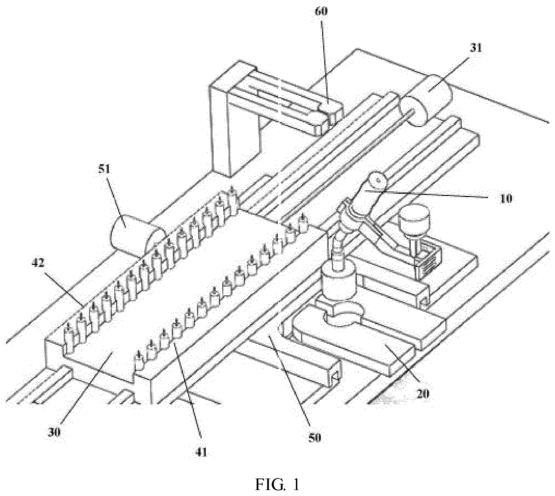

As shown in Fig. 1, the apparatus for automatically replacing a tungsten electrode according to the present invention may remove, using a gas hood mounting/ removing clamp 20, a gas hood from a welding gun 10, and after the tungsten electrode replaced, mount the gas hood to the welding gun 10.

A first tungsten electrode seat 41 for resting a burnt-off tungsten electrode and a second tungsten electrode seat 42 for resting a new tungsten electrode are respectively disposed on a transverse positioning carriage 30. Under the control of the a transverse positioning carriage driving device 31, the transverse positioning carriage 30 may move back and forth along a first direction such that the first tungsten electrode seat 41 is aligned with the tungsten electrode mounting/ removing clamp 60 or the second tungsten electrode seat is aligned with the tungsten electrode mounting/removing clamp 60.

A plurality of first rest positions are provided on the first tungsten electrode seat 41 of the transverse positioning carriage 30, and at least one first rest position is idle so as to be available for resting the currently removed burnt-off tungsten electrode; a plurality of second rest positions are provided on the second tungsten electrode seat 42, and at least one second rest position is mounted with a new tungsten electrode. In this embodiment, the first rest positions are arranged into a column along a second direction; the second rest positions are arranged into another column along a second direction, wherein the second direction is vertical to the first direction.

The transverse positioning carriage 30 is provided on a longitudinal positioning carriage 50 which is controlled, by a longitudinal positioning carriage driving device 51, to drive the transverse positioning carriage 30 to move along a second direction such that the tungsten electrode mounting/ removing clamp 60 corresponds to respective first rest positions on the first tungsten electrode seat 41, or the tungsten electrode mounting/removing clamp 60 corresponds to respective second rest positions on the second tungsten electrode seat 42.

The tungsten electrode mounting/ removing clamp 60 removes the burnt-off tungsten electrode from the welding gun 10 and rests it at a currently corresponding idle first rest position in the first tungsten electrode seat 41, and after the transverse positioning carriage 30 is moved, the new tungsten electrode is removed from a currently corresponding second rest position in the second tungsten electrode seat 42 and mounted to the welding gun 10.

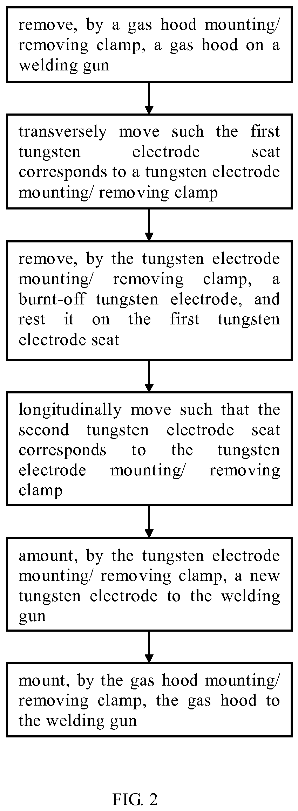

As shown in Fig. 2, when the robot welding system detects a tungsten electrode burnt off, it starts a tungsten electrode automatic replacement process:
driving, by the robot, a welding gun 10 to a gas hood mounting/ removing clamp 20 of the apparatus for automatically replacing a tungsten electrode, and removing, by the gas hood mounting/removing clamp 20, a gas hood from the welding gun 10;
then driving, by the robot, the welding gun 10 to a tungsten electrode mounting/ removing clamp 60, removing, by the tungsten electrode mounting/ removing clamp 60, a burnt-off tungsten electrode from the welding gun 10, and resting, the removed tungsten electrode, on a first tungsten electrode seat 41, wherein the first tungsten electrode seat 41 moves, in advance along with a transverse positioning carriage 30, to a position facilitating the tungsten electrode mounting/ removing clamp 60 to rest the tungsten electrode, e.g., right below the tungsten electrode mounting/ removing clamp 60 or the welding gun 10, etc.;
driving, by the longitudinal positioning carriage 50, the transverse positioning carriage 30 to move, such that a second tungsten electrode seat 42 for resting the new tungsten is moved to a position facilitating the tungsten electrode mounting/ removing clamp 60 to pick up the tungsten electrode, e.g., right below the tungsten electrode mounting/ removing clamp 60 or the welding gun 10; mounting, by the tungsten electrode mounting/ removing clamp 60, a new tungsten electrode to the welding gun 10; and
driving, by the robot, the welding gun 10 to reach the gas hood mounting/ removing clamp 20 again, and then mounting, by the gas hood mounting/removing clamp 20, the gas hood to the welding gun 10, thereby completing automatic replacement of the burnt-off tungsten electrode.

The apparatus for automatically replacing a tungsten electrode for tungsten inert gas welding and the corresponding method of the present disclosure may have other derivatives based on the specific examples described above. For example, the first tungsten electrode seat and the second tungsten electrode seat may be disposed on two carriages which move along the first direction respectively, wherein the two carriages are driven to move by one or two carriages moving along a second direction. For another example, the corresponding driving devices may control the carriages where the first and/or the second tungsten electrode seats are disposed to be movable along both the first direction and the second direction. Or, the first tungsten electrode seat is provided on the carriage moving along the first direction, while the second tungsten electrode seat is disposed on another carriage moving along the second direction; in this way, the two carriages may be controlled to independently move to the tungsten electrode mounting/ removing clamp or to move away therefrom.

In this embodiment, the first direction is vertical to the second direction; in practice, movement directions of the carriages may be set dependent on application situations. Besides moving the carriages, one or both of the tungsten electrode mounting/ removing clamp and the welding gun may be controlled to move in coordination with the carriages, so as to move the tungsten electrode seats and their corresponding positions to a set tungsten electrode mounting/removing position.

Further, the arrangement manner (including, but not limited to, the number, grouping, and arrangement direction of the tungsten electrode rest positions) of the first rest positions for resting the burnt-off tungsten electrode and the second rest positions for resting the new tungsten electrode may be adjusted arbitrarily. Based on the arrangement manner in this embodiment, preferably, the tungsten electrode mounting/ removing clamp sequentially corresponds to respective first rest positions on the first tungsten electrode seat, i.e., one side of the currently replaced (old) tungsten electrode is disposed in adjacency to the previously replaced (old) tungsten electrode, and the other side thereof is adjacent to the idle position available for next replacement; one side of the current replacing tungsten electrode is adjacent to the rest position laid idle after the previous replacement of the tungsten electrode, and the other side thereof is adjacent to a new tungsten electrode ready for next replacement.

In other examples of arrangement of the tungsten electrode rest positions, the first rest position and the second rest position may be arranged alternately in a same column; then, one side of the current new replacing tungsten electrode is adjacent to the currently replaced tungsten electrode, and the other side thereof is adjacent to an idle position ready for next replacement. For another example, any rest position in a same column may serve as the first rest position and the second rest position at different stages, i.e., there is an idle position followed by a plurality of rest positions for resting new tungsten electrodes; the first rest position is for resting the currently replaced tungsten electrode, while after the new tungsten electrode at the immediate next rest position is snapped, it forms a new idle rest position for resting the next replaced tungsten electrode, so on and so forth. In the case of arranging one column of rest positions for resting tungsten electrode, it is unnecessary to move the carriages along two directions, such that one set of carriages and driving devices may be saved.

Although the contents of the present invention have been described in detail through the foregoing preferred embodiments, it should be understood that the depictions above shall not be regarded as limitations to the present invention. After those skilled in the art having read the contents above, many modifications and substitutions to the present invention are all obvious. Therefore, the protection scope of the present disclosure should be limited by the appended claims.

## Claims

1. An apparatus for automatically replacing a tungsten electrode for tungsten inert gas welding of a robot welding system, comprising: a tungsten electrode mounting/removing clamp (60), a first tungsten electrode seat (41) and a second tungsten electrode seat (42),
the apparatus being **characterized by** comprising a transverse positioning carriage (30), a transverse positioning carriage driving device, a longitudinal positioning carriage (50) and a longitudinal positioning carriage driving device; wherein
the first tungsten electrode seat (41) is provided with a plurality of first rest positions arranged into a first column along a second direction, the first rest positions being configured for resting burnt-off tungsten electrodes;
the second tungsten electrode seat (42) is provided with a plurality of second rest positions arranged into a second column along the second direction, the second rest positions being configured for resting new tungsten electrodes;
the first tungsten electrode seat (41) and the second tungsten electrode seat (42) are disposed on the same transverse positioning carriage (30); the transverse positioning carriage (30) is controlled, by the transverse positioning carriage driving device, to move back and forth along a first direction, to drive the first tungsten electrode seat (41) or the second tungsten electrode seat (42) to move to a position corresponding to the tungsten electrode mounting/removing clamp (60) or a welding gun (10) for the tungsten inert gas welding;
the transverse positioning carriage (30) is provided on the longitudinal positioning carriage (50), the longitudinal positioning carriage (50) is controlled, by the longitudinal positioning carriage driving device, to drive the transverse positioning carriage (30) to move along the second direction such that the tungsten electrode mounting/removing clamp (60) or the welding gun (10) corresponds to respective first rest positions on the first tungsten electrode seat (41), or the tungsten electrode mounting/removing clamp (60) or the welding gun (10) corresponding to respective second rest positions on the second tungsten electrode seat (42); and
the tungsten electrode mounting/removing clamp (60) is configured to remove the burnt-off tungsten electrode from the welding gun (10) and rest the removed burnt-off tungsten electrode on one of the first rest positions; and the tungsten electrode mounting/removing clamp (60) is further configured to snap the new tungsten electrode from one of the second rest positions and mount the new tungsten electrode to the welding gun (10).

2. The apparatus for automatically replacing a tungsten electrode for tungsten inert gas welding according to claim 1, further comprising:
a gas hood mounting/removing clamp (20) which is configured to remove a gas hood from the welding gun (10) with the burnt-off tungsten electrode and mount the gas hood to the welding gun (10) with the new tungsten electrode.

3. The apparatus for automatically replacing a tungsten electrode for tungsten inert gas welding according to claim 1, wherein the first direction and the second direction are perpendicular to each other.

4. The apparatus for automatically replacing a tungsten electrode for tungsten inert gas welding according to claim 1, wherein the apparatus for automatically replacing a tungsten electrode is provided in a robot welding system that performs tube -to - tubesheet tungsten inert gas welding.

5. A method for automatically replacing a tungsten electrode for tungsten inert gas welding, the method being **characterized by** using the apparatus for automatically replacing a tungsten electrode according to any one of claims 1-4, wherein the method for automatically replacing a tungsten electrode comprises:
driving, by a robot of a welding system, a welding gun (10) for the tungsten inert gas welding, to move to a gas hood mounting/removing clamp (20) of the apparatus for automatically replacing a tungsten electrode, and removing, by the gas hood mounting/removing clamp (20), a gas hood on the welding gun (10);
driving, by the robot, the welding gun (10) to move to a tungsten electrode mounting/removing clamp (60); moving a transverse positioning carriage (30) to move along a first direction, to drive a first tungsten electrode seat (41) to move to a position corresponding to the tungsten electrode mounting/removing clamp (60) or the welding gun (10); driving, by a longitudinal positioning carriage (50), the transverse positioning carriage (30) to move along a second direction such that the tungsten electrode mounting/removing clamp (60) or the welding gun (10) corresponds to one of the first rest positions on the first tungsten electrode seat (41); removing, by the tungsten electrode mounting/removing clamp (60), a burnt-off tungsten electrode on the welding gun (10), and resting the burnt-off tungsten electrode at a currently corresponding first rest position;
driving, by moving of the transverse positioning carriage (30) along the first direction, a second tungsten electrode seat (42) to move to the position corresponding to the tungsten electrode mounting/removing clamp (60) or the welding gun (10); driving, by the longitudinal positioning carriage (50), the transverse positioning carriage (30) to move along the second direction such that the tungsten electrode mounting/removing clamp (60) or the welding gun (10) corresponds to one of the second rest positions on the second tungsten electrode seat (42); snapping, by the tungsten electrode mounting/removing clamp (60), a new tungsten electrode from a currently corresponding second rest position, and mounting the new tungsten electrode to the welding gun (10); and
driving, by the robot, the welding gun (10) to move to the gas hood mounting/removing clamp (20), and mounting, by the gas hood mounting/removing clamp (20), the gas hood to the welding gun (10).

## Patentansprüche

1. Vorrichtung zum automatischen Auswechseln einer Wolframelektrode für Wolfram-Inertgas-Schweißen eines Roboterschweißsystems, umfassend Folgendes: eine Befestigungs-/Entfernungsklemme (60) für die Wolframelektrode, einen ersten Wolframelektrodensitz (41), einen zweiten Wolframelektrodensitz (42), einen Querpositionierungswagen (30), eine Antriebsvorrichtung für den Querpositionierungswagen, einen Längspositionierungswagen (50) und eine Antriebsvorrichtung für den Längspositionierungswagen, wobei
der erste Wolframelektrodensitz (41) mit einer Vielzahl von ersten Ablagepositionen versehen ist, die in einer ersten Spalte entlang einer zweiten Richtung angeordnet sind, wobei die ersten Ablagepositionen zum Ablegen von abgebrannten Wolframelektroden konfiguriert sind;
wobei der zweite Wolframelektrodensitz (42) mit einer Vielzahl von zweiten Ablagepositionen versehen ist, die in einer zweiten Spalte entlang der zweiten Richtung angeordnet sind, wobei die zweiten Ablagepositionen zum Ablegen von neuen Wolframelektroden konfiguriert sind;
wobei der erste Wolframelektrodensitz (41) und der zweite Wolframelektrodensitz (42) auf demselben Querpositionierungswagen (30) angeordnet sind; wobei der Querpositionierungswagen (30) durch die Antriebsvorrichtung für den Querpositionierungswagen so gesteuert wird, dass er sich entlang einer ersten Richtung hin und her bewegt, um den ersten Wolframelektrodensitz (41) oder den zweiten Wolframelektrodensitz (42) in eine Position zu bewegen, die der Befestigungs-/Entfernungsklemme (60) für die Wolframelektrode oder einer Schweißpistole (10) für das Wolfram-Inertgas-Schweißen entspricht;
wobei der Querpositionierungswagen (30) auf dem Längspositionierungswagen (50) vorgesehen ist, während der Längspositionierungswagen (50) durch die Antriebsvorrichtung für den Längspositionierungswagen so gesteuert wird, dass er den Querpositionierungswagen (30) entlang der zweiten Richtung so bewegt, dass die Befestigungs-/Entfernungsklemme (60) für die Wolframelektrode oder die Schweißpistole (10) jeweiligen ersten Ablagepositionen auf dem ersten Wolframelektrodensitz (41) entspricht, oder dass die Befestigungs-/Entfernungsklemme (60) für die Wolframelektrode oder die Schweißpistole (10) jeweiligen zweiten Ablagepositionen auf dem zweiten Wolframelektrodensitz (42) entspricht; und wobei
die Befestigungs-/Entfernungsklemme (60) für die Wolframelektrode so konfiguriert ist, dass sie die abgebrannte Wolframelektrode aus der Schweißpistole (10) entfernt und die entfernte abgebrannte Wolframelektrode auf einer der ersten Ablagepositionen ablegt; und wobei die Befestigungs-/Entfernungsklemme (60) für die Wolframelektrode ferner so konfiguriert ist, dass sie die neue Wolframelektrode aus einer der zweiten Ablagepositionen einrastet und die neue Wolframelektrode an der Schweißpistole (10) befestigt.

2. Vorrichtung zum automatischen Auswechseln einer Wolframelektrode für Wolfram-Inertgas-Schweißen nach Anspruch 1, umfassend ferner Folgendes:
eine Befestigungs-/Entfernungsklemme (20) für eine Gashaube, die so konfiguriert ist, dass sie eine Gashaube von der Schweißpistole (10) mit der abgebrannten Wolframelektrode entfernt und die Gashaube an der Schweißpistole (10) mit der neuen Wolframelektrode befestigt.

3. Vorrichtung zum automatischen Auswechseln einer Wolframelektrode für Wolfram-Inertgas-Schweißen nach Anspruch 1, wobei die erste Richtung und die zweite Richtung senkrecht zueinander stehen.

4. Vorrichtung zum automatischen Auswechseln einer Wolframelektrode für Wolfram-Inertgas-Schweißen nach Anspruch 1, wobei die Vorrichtung zum automatischen Auswechseln einer Wolframelektrode in einem Roboterschweißsystem vorgesehen ist, das das Wolfram-Inertgas-Schweißen von Rohren an Rohrböden durchführt.

5. Verfahren zum automatischen Auswechseln einer Wolframelektrode für Wolfram-Inertgas-Schweißen, wobei die Vorrichtung zum automatischen Auswechseln einer Wolframelektrode nach einem der Ansprüche 1 bis 4 vorgesehen ist, wobei das Verfahren zum automatischen Auswechseln einer Wolframelektrode Folgendes umfasst:
Antreiben einer Schweißpistole (10) für das Wolfram-Inertgas-Schweißen durch einen Roboter eines Schweißsystems, um sich zu einer Befestigungs-/Entfernungsklemme (20) für die Gashaube der Vorrichtung zum automatischen Auswechseln einer Wolframelektrode zu bewegen, und Entfernen einer Gashaube auf der Schweißpistole (10) durch die Befestigungs-/Entfernungsklemme (20) für die Gashaube;
Antreiben der Schweißpistole (10) durch den Roboter, um sie zu einer Befestigungs-/Entfernungsklemme (60) für die Wolframelektrode zu bewegen; Bewegen eines Querpositionierungswagens (30), um sich entlang einer ersten Richtung zu bewegen, um einen ersten Wolframelektrodensitz (41) anzutreiben, um sich zu einer Position zu bewegen, die der Befestigungs-/Entfernungsklemme (60) für die Wolframelektrode oder der Schweißpistole (10) entspricht; Antreiben des Querpositionierungswagens (30) durch einen Längspositionierungswagen (50), um sich entlang einer zweiten Richtung zu bewegen, so dass die Befestigungs-/Entfernungsklemme (60) für die Wolframelektrode oder die Schweißpistole (10) einer der ersten Ablagepositionen auf dem ersten Wolframelektrodensitz (41) entspricht; Entfernen einer abgebrannten Wolframelektrode auf der Schweißpistole (10) durch die Befestigungs-/Entfernungsklemme (60) für die Wolframelektrode und Ablegen der abgebrannten Wolframelektrode an einer aktuell entsprechenden ersten Ablageposition;
Antreiben eines zweiten Wolframelektrodensitzes (42) durch Bewegen des Querpositionierungswagens (30) entlang der ersten Richtung, um sich zu der Position zu bewegen, die der Befestigungs-/Entfernungsklemme (60) für die Wolframelektrode oder der Schweißpistole (10) entspricht; Antreiben des Querpositionierungswagens (30) durch den Längspositionierungswagen (50), um sich entlang der zweiten Richtung so zu bewegen, dass die Befestigungs-/Entfernungsklemme (60) für die Wolframelektrode oder die Schweißpistole (10) einer der zweiten Ablagepositionen auf dem zweiten Wolframelektrodensitz (42) entspricht; Einrasten einer neuen Wolframelektrode durch die Befestigungs-/Entfernungsklemme (60) für die Wolframelektrode aus einer aktuell entsprechenden zweiten Ablageposition und Befestigen der neuen Wolframelektrode an der Schweißpistole (10); und
Antreiben der Schweißpistole (10) durch den Roboter, um sie zur Befestigungs-/Entfernungsklemme (20) für die Gashaube zu bewegen, und Befestigen der Gashaube an der Schweißpistole (10) durch die Befestigungs-/Entfernungsklemme (20) für die Gashaube.

## Revendications

1. Appareil de remplacement automatique d'une électrode de tungstène pour le soudage à l'arc sous gaz inerte avec électrode de tungstène d'un système de soudage robotisé, comprenant : une pince de montage/démontage d'électrode de tungstène (60), un premier porte-électrode de tungstène (41), un second porte-électrode de tungstène (42), un chariot de positionnement transversal (30), un dispositif d'entraînement pour chariot de positionnement transversal, un chariot de positionnement longitudinal (50) et un dispositif d'entraînement pour chariot de positionnement longitudinal ; dans lequel
le premier porte-électrode de tungstène (41) est pourvu d'une pluralité de premières positions de pose disposées en une première colonne le long d'une seconde direction, les premières positions de pose étant configurées pour poser des électrodes de tungstène brûlées ;
le second porte-électrode de tungstène (42) est pourvu d'une pluralité de secondes positions de pose disposées en une seconde colonne le long de la seconde direction, les secondes positions de pose étant configurées pour poser de nouvelles électrodes de tungstène ;
le premier porte-électrode de tungstène (41) et le second porte-électrode de tungstène (42) sont disposés sur le même chariot de positionnement transversal (30) ; le chariot de positionnement transversal (30) est commandé, par le dispositif d'entraînement pour chariot de positionnement transversal, pour se déplacer d'avant en arrière le long d'une première direction, afin d'entraîner le premier porte-électrode de tungstène (41) ou le second porte-électrode de tungstène (42) à se déplacer vers une position correspondant à la pince de montage/démontage d'électrode de tungstène (60) ou à un pistolet de soudage (10) pour le soudage à l'arc sous gaz inerte avec électrode de tungstène ;
le chariot de positionnement transversal (30) est prévu sur le chariot de positionnement longitudinal (50), le chariot de positionnement longitudinal (50) est commandé, par le dispositif d'entraînement pour chariot de positionnement longitudinal, pour entraîner le chariot de positionnement transversal (30) à se déplacer le long de la seconde direction de telle sorte que la pince de montage/démontage d'électrode de tungstène (60) ou le pistolet de soudage (10) corresponde à des premières positions de pose respectives sur le premier porte-électrode de tungstène (41), ou que la pince de montage/démontage d'électrode de tungstène (60) ou le pistolet de soudage (10) corresponde à des secondes positions de pose respectives sur le second porte-électrode de tungstène (42) ; et
la pince de montage/démontage d'électrode de tungstène (60) est configurée pour retirer l'électrode de tungstène brûlée du pistolet de soudage (10) et pour poser l'électrode de tungstène brûlée retirée sur l'une des premières positions de pose ; et la pince de montage/démontage d'électrode de tungstène (60) est en outre configurée pour encliqueter la nouvelle électrode de tungstène à partir de l'une des secondes positions de pose et pour monter la nouvelle électrode de tungstène sur le pistolet de soudage (10).

2. Appareil de remplacement automatique d'une électrode de tungstène pour le soudage à l'arc sous gaz inerte avec électrode de tungstène selon la revendication 1, comprenant en outre :
une pince de montage/démontage de capot à gaz (20) qui est configurée pour retirer un capot à gaz du pistolet de soudage (10) avec l'électrode de tungstène brûlée et pour monter le capot à gaz sur le pistolet de soudage (10) avec la nouvelle électrode de tungstène.

3. Appareil de remplacement automatique d'une électrode de tungstène pour le soudage à l'arc sous gaz inerte avec électrode de tungstène selon la revendication 1, dans lequel la première direction et la seconde direction sont perpendiculaires l'une à l'autre.

4. Appareil de remplacement automatique d'une électrode de tungstène pour le soudage à l'arc sous gaz inerte avec électrode de tungstène selon la revendication 1, dans lequel l'appareil de remplacement automatique d'une électrode de tungstène est prévu dans un système de soudage robotisé qui effectue un soudage à l'arc sous gaz inerte avec électrode de tungstène de tube sur plaque.

5. Procédé de remplacement automatique d'une électrode de tungstène pour le soudage à l'arc sous gaz inerte avec électrode de tungstène, l'appareil de remplacement automatique d'une électrode de tungstène pour le soudage à l'arc sous gaz inerte avec électrode de tungstène selon l'une quelconque des revendications 1 à 4, dans lequel le procédé de remplacement automatique d'une électrode de tungstène comprend :
l'entraînement, par un robot d'un système de soudage, d'un pistolet de soudage (10) pour le soudage à l'arc sous gaz inerte avec électrode de tungstène, pour se déplacer vers une pince de montage/démontage de capot à gaz (20) de l'appareil de remplacement automatique d'une électrode de tungstène, et le démontage, par la pince de montage/démontage de capot à gaz (20), d'un capot à gaz sur le pistolet de soudage (10) ;
l'entraînement, par le robot, du pistolet de soudage (10) pour se déplacer vers une pince de montage/démontage d'électrode de tungstène (60) ; le déplacement d'un chariot de positionnement transversal (30) pour se déplacer dans une première direction, afin d'entraîner un premier porte-électrode de tungstène (41) à se déplacer vers une position correspondant à la pince de montage/démontage d'électrode de tungstène (60) ou au pistolet de soudage (10) ; l'entraînement, par un chariot de positionnement longitudinal (50), du chariot de positionnement transversal (30) pour se déplacer dans une seconde direction de telle sorte que la pince de montage/démontage d'électrode de tungstène (60) ou le pistolet de soudage (10) corresponde à l'une des premières positions de pose sur le premier porte-électrode de tungstène (41) ; le démontage, par la pince de montage/démontage d'électrode de tungstène (60), d'une électrode de tungstène brûlée sur le pistolet de soudage (10), et la pose de l'électrode de tungstène brûlée dans une première position de pose actuellement correspondante ;
l'entraînement, par déplacement du chariot de positionnement transversal (30) dans la première direction, d'un second porte-électrode de tungstène (42) pour se déplacer vers la position correspondant à la pince de montage/démontage d'électrode de tungstène (60) ou au pistolet de soudage (10) ; l'entraînement, par le chariot de positionnement longitudinal (50), du chariot de positionnement transversal (30) pour se déplacer le long de la seconde direction de telle sorte que la pince de montage/démontage d'électrode de tungstène (60) ou le pistolet de soudage (10) corresponde à l'une des secondes positions de pose sur le second porte-électrode de tungstène (42) ; l'encliquetage, par la pince de montage/démontage d'électrode de tungstène (60), d'une nouvelle électrode de tungstène à partir d'une seconde position de pose actuellement correspondante, et le montage de la nouvelle électrode de tungstène sur le pistolet de soudage (10) ; et
l'entraînement, par le robot, du pistolet de soudage (10) pour se déplacer vers la pince de montage/démontage de capot à gaz (20), et le montage, par la pince de montage/démontage de capot à gaz (20), du capot à gaz sur le pistolet de soudage (10).
